# EUROPEAN PATENT APPLICATION

(11) **EP 4 671 106 A1**
(43) Date of publication of application: **31.12.2025**
(21) Application number: 24185422.3
(22) Date of filing: 28.06.2024
(51) Int. Cl.: B62K 27/00, B62B 7/12, B62K 27/02, B62J 1/00, B62K 27/16

(54) **TRANSPORT DEVICE**

(71) Applicant: HTS Hans Torgersen & Sønn AS, 3535 Krøderen (NO)
(72) Inventor: VAN DER LEEUW, Jesse Daniel, 1076 SW Amsterdam (NL); PENA MONKEN, Olavo, 3514 HD Utrecht (NL); DAVIDS, Henricus Petrus Bernardus, 3581 GM Utrecht (NL); CLAESSEN, Martijn Henri Johan, 3552 ET Utrecht (NL)
(74) Representative: Meissner Bolte Partnerschaft mbB

(57) **Abstract**

Transport device (1), preferably a bicycle trailer and/or a stroller, comprising: a frame (110); a seat section (210) formed by a first polymer foam (211) comprising a bottom element, wherein the frame (110) supports the first polymer foam (211); and at least one wheel (2).

## Description

The present invention relates to a transport device, preferably a bicycle trailer and/or a stroller.

Bicycle trailers are usually attached to the rear of a bike to transport children. These bicycle trailers can typically be converted to a stroller, wherein the drawbar of the bicycle trailer is replaced by a front wheel. Hence, bicycle trailers can be used in various different configurations and utilizations.

Bicycle trailers typically comprise a frame acting as a crumple zone to protect the passenger, i.e. a child, of the trailer in the event of an accident. The bottom and/or bottom section of a bicycle trailer is typically made out of a fabric comprising a plurality of different fabric layers or out of a rigid metal or plastic floor sheet. The walls and the roof of bicycle trailers usually comprise a plastic fabric stretched over the frame. Hence, a bicycle trailer is made out of a plurality of different materials. The fabrics are usually dyed. Fabric dyes are known be to pollutants, the dying process can be very polluting to the environment.

However, such bicycle trailers provide only low impact protection, as the material, in particular the fabric or the metal or plastic sheet, can only absorb low impact forces. Thus, in case of an accident, the passengers of the trailer might be injured.

Thus, it is an object of the invention to provide a transport device which is lightweight and comprises an increased impact protection.

The problem is solved by a transport device according to claim 1.

According to the invention a transport device, in particular for transporting at least one passenger and/or at least one child, preferably a bicycle trailer and/or a stroller, is provided, wherein the transport device comprises a frame, a seat section and at least one main wheel, wherein the at least one main wheel preferably carries the main load of the transport device. Thus, the at least one main wheel discharges the load of the transport device to the underlying ground.

According to the invention, the seat section is formed by a first polymer foam having a bottom element, wherein the frame supports the first polymer foam. Polymer foam, in particular polymer foam made of expanded polypropylene, comprises a high impact shock absorption while remaining lightweight. Polymer foams are thus typically used as a bumper and/or safety material. The first polymer foam forms an impact protection to protect the at least one passenger, e.g. at least one child, of the transport device during an impact and/or an accident. On impact, the first polymer foam preferably fulfills the function of a crumple zone and absorbs the energy through compression and/or fracture. This absorbs the impact energy by dispersing the impact energy within its structure and reduces the impact exerted on the at least one passenger and thus reduces the likelihood of severe injuries of the at least one passenger. The seat section and the frame particularly form a bottom element or part of a passenger cabin, which is attached to the at least one main wheel.

Moreover, by use of the polymer foam, the number of materials being used for the transport device are preferably reduced. Hence, the production, disposal and the recovery of the materials in the transport device is simplified. Additionally, polymer foams are chemically stable and safe. Furthermore, pollution due to dyeing of fabrics, e.g. fabrics used for at least the bottom element or part of the passenger cabin, does not occur.

The first polymer foam is supported by the frame. This particularly means that the frame carries the first polymer foam on its top side and/or supports the first polymer foam on its bottom side, wherein the first polymer foam preferably rests on the frame.

The frame particularly encircles the seat section of the transport device, particularly at least one seating surface of the seat section. This means that the frame at least partially encircles at least a part of the seat section on the outside of the first polymer foam and/or the frame at least partially encircles at least a part of the seat section on the outside of the first polymer foam. Alternatively or additionally, the frame encircles at least partially at least a part of the seat section on top and/or the bottom of the first polymer foam. In an additional or alternative embodiment, the frame may be located within the first polymer foam and at least partially encircle the seating area as delineated above.

At least one passenger can be transported by the transport device. Preferably, one or two, or more, passengers, in particular children, are transported by the transport device.

In an embodiment, the transport device further comprises a rear section and/or a bumper section, in particular a front bumper section. The rear section can be used as a cargo section to transport goods and/or cargo and/or luggage. The at least one bumper section is preferably used as an additional impact protection for the at least one passenger placed on the front and/or the side and/or the back of the transport device. Particularly, the bottom element of the passenger cabin also comprises the rear section and/or the bumper section.

In a further embodiment, the seat section and/or the rear section and/or the bumper section are formed by the first polymer foam or by individual polymer foams. Hence, in particular the whole bottom of the transport device can be made of one single polymer foam. Alternatively, the rear section can be formed by a second polymer foam and/or the bumper section can be formed by third polymer foam. Hence, the size of the individual polymer foams may be reduced compared to a single polymer foam decreasing the production costs.

The frame in particular encircles the seat section and/or the rear section and/or the bumper section formed by the first polymer foam or the individual polymer foams.

In particular, the seat section and the rear section are attached, preferably via the frame, to each other. The attachment between the seat section and the rear section preferably comprises a plurality of, in particular tooth-like, protrusions of the seat section, e.g. of the first polymer foam, engaging with in particular tooth-like, protrusions of the rear section, e.g. of the second polymer foam. Preferably, the protrusions form a corresponding Zig-Zag-pattern or a meander pattern, such that the protrusions of the seat section engage in a recess of the rear section formed between two protrusions and vice versa. Alternatively, the seat section and the seat section can be stacked onto each other. However, the Zig-Zag pattern provides the effect that the attachment is not building up height and can be formed thin. The attachment between the seat section and the rear section is particularly located on a bottom frame element of the frame and attached thereto. Hence, the seat section and the rear section can be coupled to each other preventing a relative movement to each other.

In an embodiment, the seat section comprises at least one, preferably inclined, seating surface and/or at least one standing surface and/or at least one side polymer foam element. The at least one passenger of the transport device may thus sit on the seating surface. The bottom side of the seat section comprises preferably recesses underneath the seating surface to reduce the thickness under the seat. The seating surface particularly unitarily forms individuals seats for the at least one passenger.

Preferably, at least one seat back is attached to the seating section, in particular to the seating surface, to increase the comfort of the at least one passenger. In particular, the seat back may be made out of a fabric and/or a plastic sheet and/or a metal sheet and/or a polymer foam, particularly expanded polypropylene.

The standing surface is preferably located in front of the seating surface in view of a planned driving direction. Hence, the transport device comprises a footrest for the at least one passenger. The seat surface is in particular raised compared to the standing surface. This also provides a location onto which the at least one passenger may stand when entering and exiting the transport device.

The at least one side polymer foam element preferably forms the sidewalls of the seating section. The rear section in particular also comprises at least one side polymer foam element. Hence, the seat section and/or the rear section may have a tub-like form, so that the transport device also comprises a side impact protection.

In an embodiment, the seat section comprises at least one recess and/or at least one through hole or passage opening to attach a restraint system, e.g. a seatbelt system, to the seat section. In particular, the restraint system is attached to the frame. Thus, the safety of the at least one passengers is further increased. Moreover, the recesses and/or the through holes might be used for weight reducing purposes and/or for accommodating at least a part of the frame.

In a further embodiment, the frame comprises at least one bottom frame element, running at least partially form a front area to a rear area of the transport device. Preferably, the at least one bottom frame element runs from the front of transport device to the position of the rotational axis of the axle of the at least one main wheel. Alternatively or additionally, the at least one bottom frame element is located underneath or within the seat section and/or the rear section and/or the bumper section. The seat section and/or the rear section and/or the bumper section comprise particularly at least one recess to receive the at least one bottom frame element. Additionally or alternatively, the seat section and/or the rear section and/or the bumper section are supported by and/or rest on the at least one bottom frame element so that the at least one bottom frame element bears the load of the sections increasing the stability of the transport device. Preferably, the seat section and the rear section are attached to each other via at least one bottom frame element.

Preferably, the frame comprises at least one base frame element in particular encircling the seat section and/or the rear section and/or the bumper section, preferably located in an upper area of the seat section and/or the rear section and/or the bumper section. The upper area of the seat section and/or the rear section and/or the bumper section is preferably located on the side opposite to the side of the seat section and/or the rear section and/or the bumper section oriented towards to the underlying ground. Particularly, the base frame element and the at least one bottom frame element are attached to each other at the front and/or the side and/or the rear of the transport device. Preferably, a middle frame element may be provided to connect the at least one bottom frame element and the base frame element.

In an embodiment, the seat section and/or the rear section and/or the bumper section are attached to the frame, preferably attached to the at least one bottom frame element and/or to the at least one base frame element. In particular, the frame and the individual polymer foams may be attached to each other by screws and/or rivets and/or adhesives. Alternatively, the individual polymer foam may comprise a rolled edge in the form of an inverted U to accept and encircle the frame and to hang on the frame.

The seat section and/or the rear section and/or the bumper section are attached to the frame by a frictional connection, particularly based on the seat section and/or the rear section and/or the bumper section being pressed to the frame. Particularly, the seat section and/or the rear section and/or the bumper section are pressed to the frame by a washer, particularly a washer comprising a tubular member, and a screw at a plurality of positions. In particular, due to the attachment by use of the washer and the screw, the seat section and/or the rear section and/or the bumper section are in compressed. Alternatively, the seat section and/or the rear section and/or the bumper section may be pressed or compressed in between two components of the frame.

The first polymer foam and/or the second polymer foam and/or the third rubber are preferably a closed cell polymer foam. Particularly, the first polymer foam and/or the second polymer foam and/or the third rubber are made out of expanded Polypropylene (EPP) and/or expanded ethylene-vinyl acetate.

In particular, the seat section and/or the rear section and/or the bumper section are solely formed by the respective polymer foam. Preferably in a unitary or integrally formed manner. Thus, preferably, no further shell is attached to the bottom side and/or top side and/or the side elements of the seat section and/or the rear section and/or the bumper section. However, cushions or the like can be attached to the seating surface of the seat section to increase the comfort of the at least one passenger.

In particular, the frame comprises metal and/or fiber composite and/or plastic. Hence, the frame can in particular be made of steel and/or aluminum and/or plastics and/or glass fiber composites and/or carbon fiber composites. The frame particularly comprises hollow profile elements or tubing.

The transport device preferably comprises two main wheels, wherein each main wheel is arranged laterally to the frame and/or the seat section and/or the rear section and/or the bumper section. Thus, the passenger cabin is placed in between the main wheels so that the passenger cabin is held stably above the ground by the main wheels.

The axle of the at least one main wheel is attached to the passenger cabin, in particular to the frame. Preferably, the axle of the at least one main wheel is attached to the frame between the at least one bottom frame element and the at least one base frame element. Particularly, the middle frame element comprises a recess for the axle of the at least one main wheel. Preferably, each wheel comprises its own axle. The axle in particular does not extend through the whole bottom element of the passenger cabin.

In an embodiment, the rotational axis, in particular the rotational axis of the axle, of the at least one main wheel extends at least partially through bottom element of the passenger cabin, i.e. the frame and/or the seat section and/or the rear section and/or the bumper section. This means that the rotational axis of the at least one main wheel is preferably located between a top plane and bottom plane, the bottom plane being defined by the bottom of the passenger cabin and/or the frame and/or the seat section and/or the rear section and/or the bumper section. The top plane is defined by the top of the bottom element of the passenger cabin and/or the frame and/or the seat section and/or the rear section and/or the bumper section. Alternatively or additionally, the rotational axis of the at least one wheel extends at least partially underneath the bottom element of the passenger cabin. Hence, the transport device has a low center of mass/gravity providing a smooth and a safe transport of the at least one passenger. The rotational axis may particularly be a thought or imaginary extension of the rotational axis of axle of the at least one main wheel extending outside of the axle.

In particular, the transport device comprises a mounting element for connecting a drawbar and/or one or more front wheels. Hence, the transport device can easily be converted from a trailer to a stroller and vice versa. Thus, the transport device can be used for various different applications. The front wheel(s) of the stroller can either have a small diameter for stroller purposes or have a larger diameter for jogging or running purposes.

The transport device preferably comprises front reflectors and/or rear reflectors increasing the visibility of the transport device.

In addition, the transport device may comprise a handle bar, which may be adjusted in height by a rotational mechanism.

Moreover, the transport device comprises at least one brake, in particular a disc brake. The brake may be operated manually by a person operating the transport device by use of a braking mechanism, e.g. a handle, at the handle bar.

The seat section and/or the rear section can comprise guidance recesses to receive the brake lines of the braking mechanism.

The transport device particularly comprises a support frame preferably acting as a rollover cage to protect the at least one passenger if the transport device falls on its side or is rolled over during an impact or an accident. Hence, the safety of the at least one passenger is further increased. The support frame particularly comprises rods with a hollow profile, preferably made out of metal, in particular aluminum. The support frame may be part of the passenger cabin and may be attached to the frame and/or the bottom element of the passenger cabin.

The transport device preferably comprises a canopy, for example a canopy made out of fabric, to protect the at least one passenger from rain and/or dirt and/or insects. The canopy may be attached to the passenger cabin.

The above and further features and advantages of the invention will become more readily apparent from the following detailed description of preferred embodiments of the invention with reference to the accompanying drawings, in which like reference signs designate like features, and in which
- Fig. 1: is a perspective front view of a first embodiment of a transport device;
- Fig. 2: is a side view of the transport device of Fig. 1;
- Fig. 3: is a perspective front view of the transport device of Fig. 1 without a seat back;
- Fig. 4: is a perspective view of a bottom element of a passenger cabin of the transport device of Fig. 1;
- Fig. 5: is bottom view of the bottom element of the passenger cabin of Fig. 4;
- Fig. 6: is a section view of the bottom element of the passenger cabin of Fig. 4;
- Fig. 7: is a top view of a polymer foam assembly of the bottom element of the passenger cabin of Fig. 5
- Fig. 8: is a side view of the polymer foam assembly of Fig. 8;
- Fig. 9: is a top view of a polymer foam assembly of Fig. 8 showing individual polymer foam of the assembly
- Fig. 10: is a side view of the polymer foam assembly of Fig. 8 showing individual polymer foam of the assembly;
- Fig. 11: is a perspective view of an example of an attachment between the frame and the polymer foam assembly;
- Fig. 12: is a sectional view of the bottom element of the passenger cabin of Fig. 4;
- Fig. 13: is an enlarged sectional view of the of the bottom element of the passenger cabin of Fig. 12;
- Fig. 14: is a perspective front view of a second embodiment of the transport device; and
- Fig. 15: is a perspective front view of a third embodiment of the transport device.

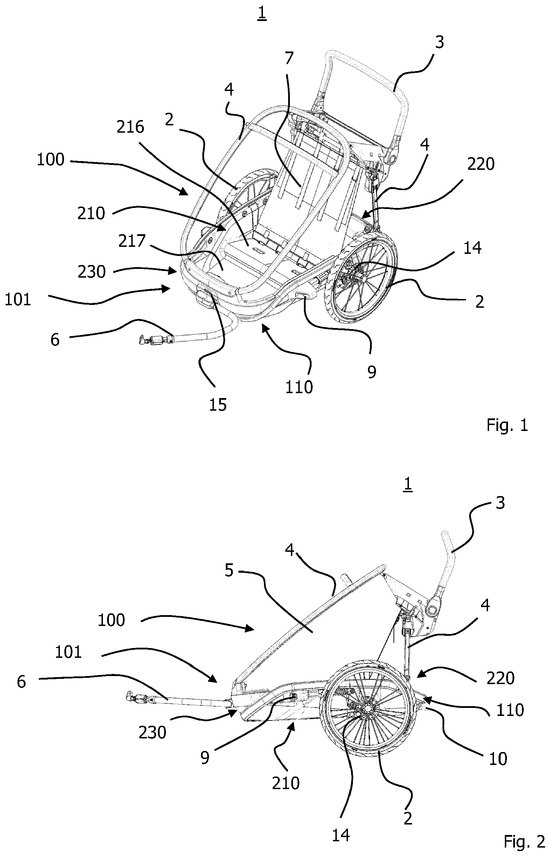

Figs. 1 and 2 depict a transport device 1 for two passengers according to a first embodiment. The transport device 1 comprises a drawbar 6 being attached to a mounding element 15. The transport device 1 according to the first embodiment is thus a bicycle trailer. The transport device 1 comprises a passenger cabin 100, two main wheels 2, which are located lateral to the passenger cabin 100 and a handle bar 3.

The passenger cabin 100 comprises an aluminum frame 110 made of hollow aluminum profiles and a support frame 4 being attached on top of the frame 110. The support frame 4 acts as a rollover cage to protect the passengers if the transport device 1 falls to the side or rolls over. The support frame 4 connects the frame 110 with the handle bar 3. A canopy 5 may further be attached to the support frame 4 is provided to protect the passengers from rain and/or dirt and/or insects. The canopy 5 covers the sides of the passenger cabin 100 and/or the front of the passenger cabin 100.

The passenger cabin 100 comprises a seat section 210, a rear section 220 and a bumper section 230. The seat section 210 comprises a bottom element having an inclined seating surface 216 and a standing surface 217. The seating surface 216 forms two individual seats for the passengers of the transport device 1. Hence, the seats for the passengers are unitarily formed by the seat section 210. The passengers of the transport device 1 may sit on the seating surface 216 and rest their feet on the standing surface 217. Additionally, the passengers may get into the transport device 1 by at first getting on the standing surface 217 and then sitting down on the seating surface 216. To get off the transport device 1, the passengers may first stand up from the seating surface 216, ideally onto the standing surface 217, and then leave the transport device 1.

A seat back 7 is provided between the seat section 210 and the rear section 220 being attached to the seating surface 216 and running upwards towards the handle bar 3.

The transport device 1 further comprises a front reflector 9 and a rear reflector 10 to increase the visibility of the transport device 1. In addition, the transport device 1 contains a disc brake 14 attached to each of the main wheels 2. The disc brake 14 can be operated by a handle attached to the handle bar 3.

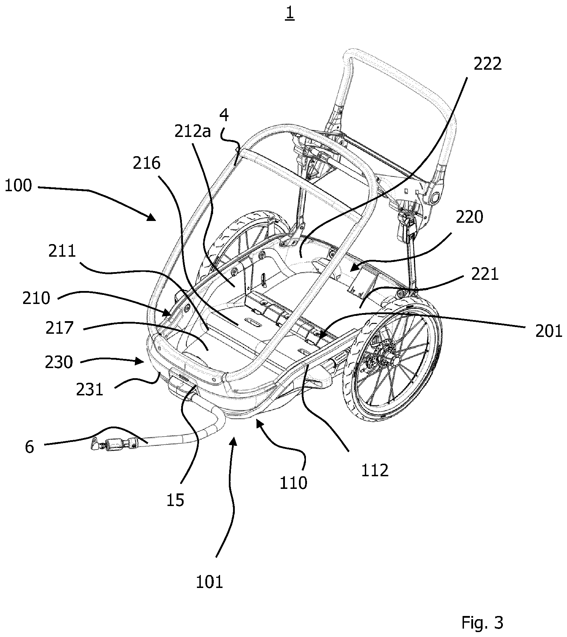

Fig. 3 is a perspective view of the transport device 1, wherein the seat back 7 is not depicted.

The seat section 210 is formed by a first polymer foam 211. The first polymer foam 211 thus forms the seating surface 216, the standing surface 217 and a side element 212 of the seat section 210. The rear section 220 is formed by a second polymer foam 211, which comprises a bottom element and a side element 222.

The first polymer foam 211 of the seat section 210 and the second polymer foam 221 of the rear section 220 form a connection area 201, at which they are attached to each other.

The bumper section 230 is formed by a third polymer foam 231. In the first embodiment of the transport device, the bumper section 230 is placed in the front of the transport device 1, to provide a front impact protection. However, additional bumper sections may be provided on at least one or both sides and/or the rear of the transport device 1.

According to the first embodiment of the transport device 1 the first polymer foam 211 of the seat section 210 and the second polymer foam 221 of the rear section 220 and the third polymer foam 231 of the bumper section 230 are separate and form a polymer foam assembly 200. However, in another embodiment, the polymer foam assembly 200 and thus the seat section 210 and/or the rear section 220 and/or the bumper section 230 may be formed by one single unitary or integrally formed polymer foam.

The first polymer foam 211 and/or the second polymer foam 221 and/or the third polymer foam 231 are made out of expanded Polypropylene EPP.

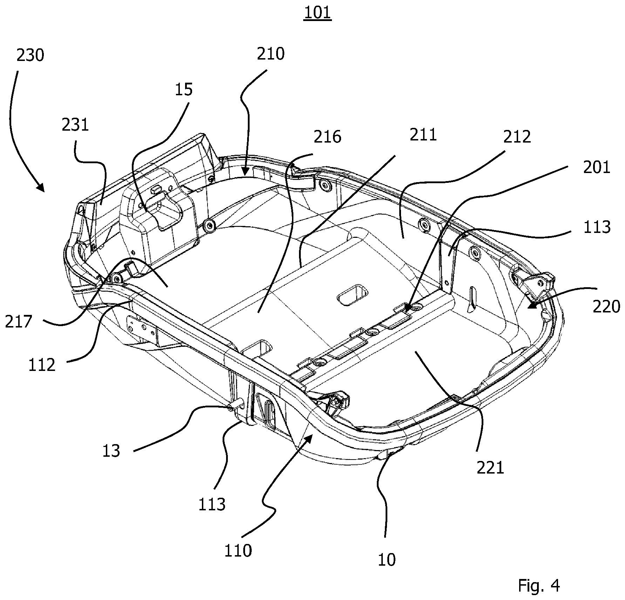

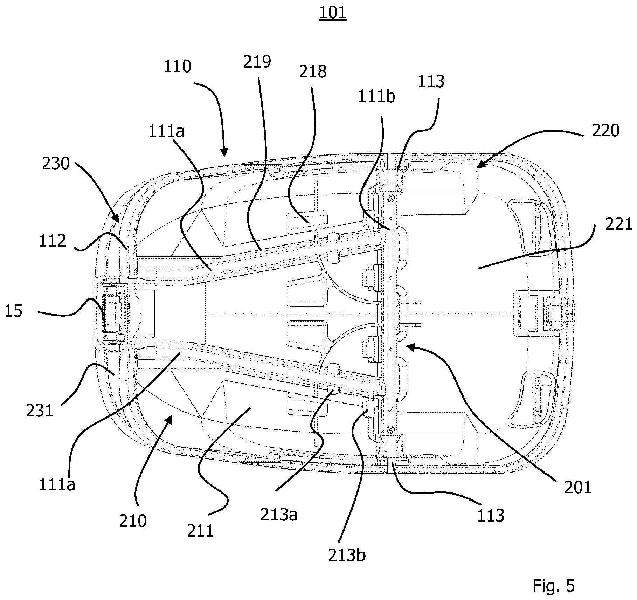

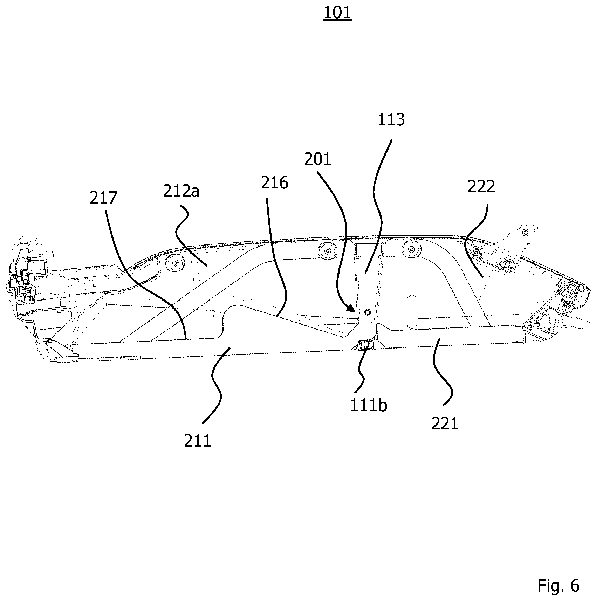

The polymer foam assembly 200 and the frame 110 form a bottom element 101 of the passenger cabin 100 as depicted in Fig. 4 in a perspective view, in Fig. 5 in a bottom view and in Fig. 6 in a sectional view.

Although polymer foam, particularly expanded polypropylene, comprises good compressive properties, it tends to shatter under tensile loads. Hence, the frame 110 is provided to support the polymer foam assembly 200 to overcome the shattering issues. As an aluminum frame around the whole polymer foam assembly 200 is very expensive, it is suggested to provide a frame 110 that preferably encircles the sections of the polymer foam assembly 200 that will be under tensile load in use. Hence, the size of the frame 110 and the required aluminum are minimized

The frame 110 comprises a base frame element 112, encompassing or encircling the seat section 210 and the rear section 220. The bumper section 230 is placed on top of the base frame element 112. The frame 110 additionally comprises two middle frame element 113 containing an axle 13 of the main wheels 2.

The frame 110 further comprises bottom frame elements 111a, 111b. The bottom frame element 111b is attached to the two middle frame elements 113 and runs underneath a connection area 201 of the seat section 210 and the rear section 220. The bottom frame elements 111a are respectively attached to the base frame element 112 in the area of the mounting element 15 at the front of the transport device 1. Starting from the mounting element 15, the bottom frame elements 111a proceed in an angled manner, that is diverging away from each other, underneath the seat section 210 towards the bottom frame element 111b and are attached thereto. Hence, the frame 110 is located underneath and supports or carries the first polymer foam 211 of the seat section and forms a stable support for the polymer foam assembly 200. In particular, the weight of the passengers is transferred from the polymer foam assembly 200 to the frame 110. Hence, the load on the seat section 210 is transferred to the frame 110, so that the thickness of the first polymer foam 211 can be reduced or at least kept to a minimum, whilst also providing appropriate stability to the transport device 1. If the first frame 110 does not comprise the bottom frame elements 111a, 111b, the first polymer foam 211 needs to be thicker in order to take the weight of the passengers.

The seat section 210 comprises recesses 219 to accommodate the bottom frame elements 111a. Furthermore, the seat section 210 comprises recesses 218 underneath the seating surface 216 to reduce the thickness of the first polymer foam 211 in this area.

In an alternative embodiment, further bottom frame elements may be provided underneath the rear section 220 of the transport device 1.

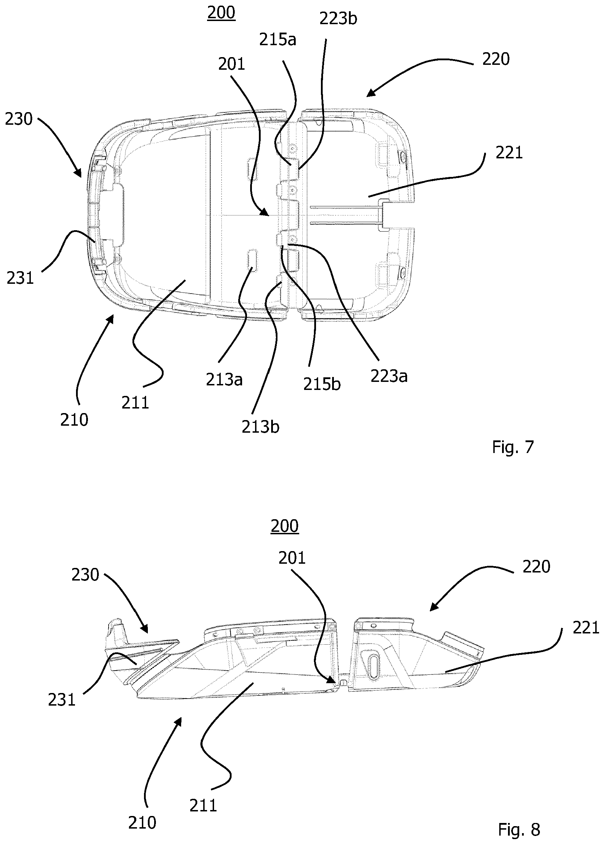

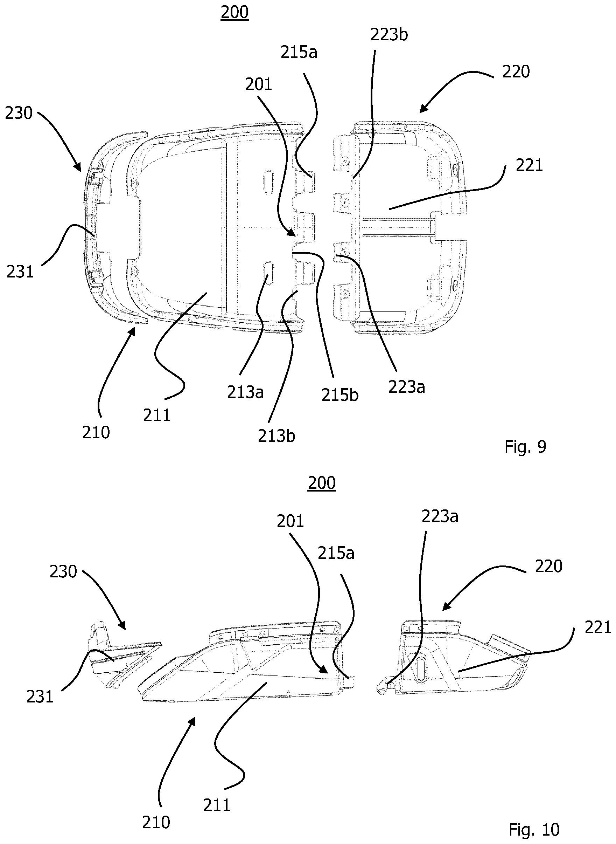

Figs. 7 and 8 depict the polymer foam assembly 200 in an assembled form. Figs. 9 and 10 show the polymer foam assembly 200 in a disassembled form.

In the assembled form of the polymer foam assembly 200, the first polymer foam 211 of the seat section 210 and the third polymer foam 231 of the bumper section 230 are in contact with each other. Hence, an impact on the bumper section 230 is reduced by the third polymer foam 230 and may be transferred to the first polymer foam 211 of the seat section 210 to provide further impact reduction by the first polymer foam 211. Additionally, the impact on the bumper section 230 may be transferred to the frame 110.

The polymer foam assembly 200 comprises through holes 213a, 213b. The through holes 213a are located in the first polymer foam 211 of the seat section 210. Each through hole 213a is placed over a bottom frame element 111a, cf. Fig. 5. The through holes 213b are located between the first polymer foam 211 and the second polymer foam 221. Hence, the through holes 213b are formed by the first polymer foam 211 and the second polymer foam 221. Due to the through holes 213a, 213b a restraint system, e.g. a seat belt system, can be attached to the transport device 1. The restraint system is preferably attached to the frame 110, in particular the bottom frame elements 111a, 111b to ensure a secure fastening.

The polymer foam assembly 200 comprises a connection area 201, which is at the location where the first polymer foam 211 attaches to the second polymer foam 221. The first polymer foam 211 comprises a plurality of protrusions 215a protruding from the first polymer foam 211 in a tooth-like manner. A plurality of recesses 215b is formed between the protrusions 215a. The second polymer foam 221 also comprises a plurality of protrusions 223a protruding from the second polymer foam 221 in a tooth-like manner. Between two adjacent protrusions 223a a recess 223b is formed.

The protrusions 215a of the first polymer foam 210 and the recesses 223b of the second polymer foam 220 comprise a corresponding form. Additionally, the protrusion 223a and the recesses 215b comprise a corresponding form. Hence, the seat section 210 and the rear section 220 can be attached to each other by the protrusions 215a, 223a and recesses 215b, 223b engaging with and/or into each other. Hence, the seat section 210 and the rear section 220 are attached to each other preventing a relative movement between each other. The protrusions 223a of the rear section 220 can be attached to the bottom frame element 111b. However, in an additional or alternative embodiment, the protrusions 215a of the seat section 210 be attached to the bottom frame element 111b.

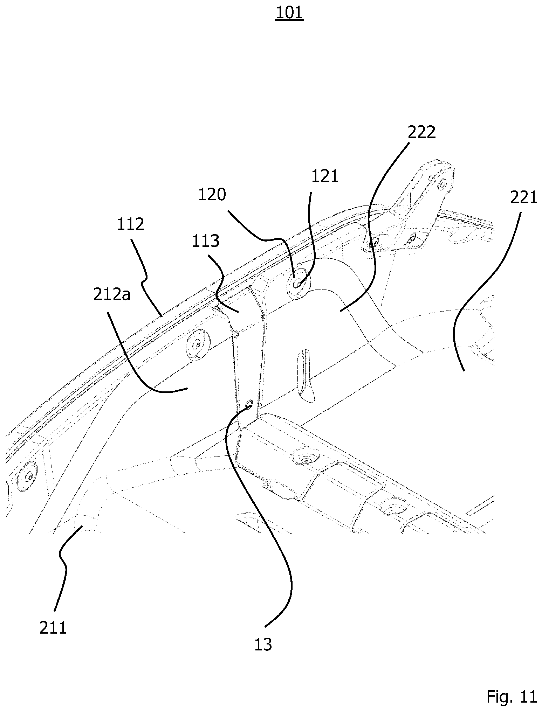

As shown in Figs. 11-13, the polymer foam assembly 200 is attached to the frame 110. According to the embodiment, the first polymer foam 211 and the second polymer foam 221 and the third polymer foam 231 are attached to the frame 110 by washers 120 and screws 121. The side element 212 of the first polymer foam 211 and of the side element 222 of the second polymer foam 221 are attached to the base frame element 112 as depicted in Figs. 11-13. However, the first polymer foam 211 and/or the second polymer foam 221 and/or the third polymer foam 231 may be attached to the bottom frame element 111a, 111b and/or the middle frame element in a similar way.

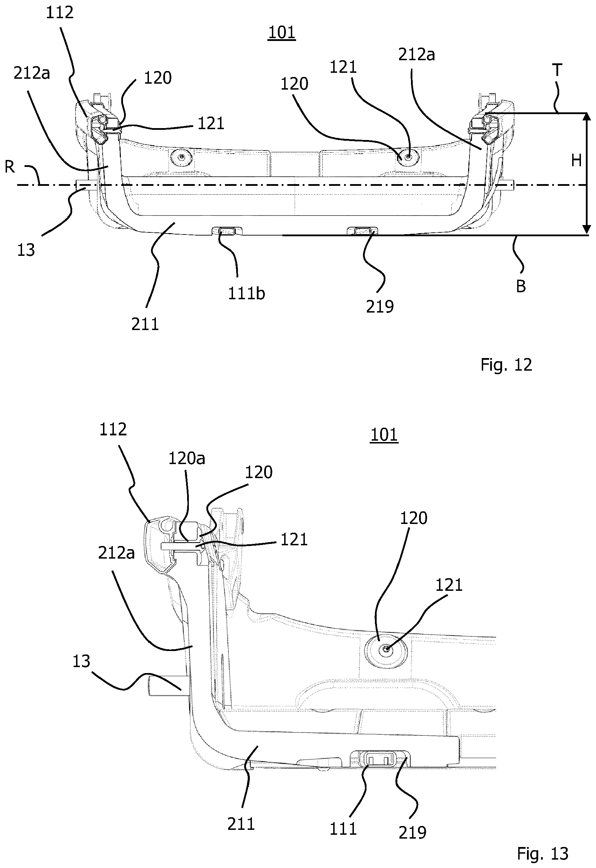

As depicted in the sectional views of Figs. 12 and 13, the side element 212 comprises a through hole. The screw 121 may be screwed into and thus fixed to the base frame element 112. The washer 120 forms a stop for the head of the screw 121 so that the load of the screw 121 is distributed over a larger area of the side element 121. In addition, the washer 120 comprises a tubular member 120a extending into the through hole to provide a guidance for the screw 121. In an untightened position, the tubular member 120a does not touch the base frame element 112. If the screw 121 is tightened, the screw 121 will press the washer 120 onto the side element 212 compressing the side element 212 until the tubular member 120b touches the frame 110. Hence, a secure and load bearing attachment between the side element 212 of the first polymer foam 211 and the base frame element 112 of the frame 110 can be ensured. Instead of screws, 121 other fastening elements, e.g. rivets or the like, can be used.

In a further embodiment, the polymer foam assembly 200 is attached to the frame 110 by use of an adhesive.

In an embodiment, the side element 121 may provide an over-rolled or upturned edge, such that the edge has a form of an inverted U. Hence, the edge may encircle the base frame element 112 such that the polymer foam hangs on the frame 110.

As depicted in Fig. 12, a rotational axis R of the main wheels 2 is defined by the axle 13. The rotational axis R is a thought or imaginary extension of the rotational axis of the axle 13. The rotational axis R extends through the bottom element 101 of the passenger cabin 100. Hence, the rotational axis R of the main wheels 2 is located between a top plane T and a bottom plane B. The top plane T is defined by the top of the bottom element 101. However, in further embodiments, the top plane may be defined by the top of the frame 110 and/or the seat section 210 and/or the rear section 220 and/or the bumper section 230. The bottom plane B is defined by the bottom of the bottom element 101. However, in further embodiments, the bottom plane B may be defined by the bottom of the frame 110 and/or the seat section 210 and/or the rear section 220 and/or the bumper section 230. The top plane T and the bottom plane B are distanced from each other by the height H. Alternatively or additionally, the rotational axis R can be located underneath the bottom element 101 of the passenger cabin 100.

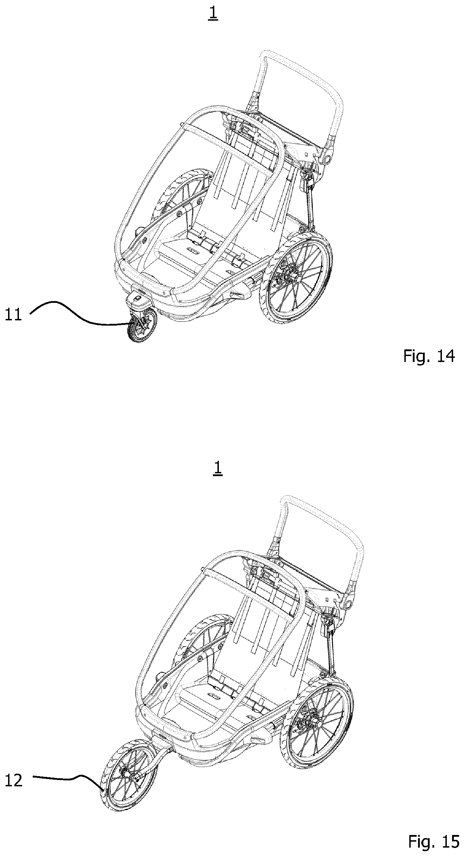

In a second embodiment of the transport device 1, the transport device 1 comprises at least one stroller wheel 11 attached to the mounting element 15 as front wheel instead of the drawbar 6, cf. Fig. 14.

In a third embodiment, the transport device 1 comprises at least one jogger wheel 12 attached to the mounting element 15 as front wheel, instead of the drawbar 6, cf. Fig. 15. The jogger wheel 12 has an increased diameter compared to the stroller wheel 11 providing a smoother ride at higher speeds. However, in the second and the third embodiment of the transport device 1, the transport device 1 is in a stroller configuration.

Particularly, the mounting element 15 provides the possibility to convert the transport device 1 between the bicycle trailer of embodiment 1 and/or the stroller configuration of embodiment 2 and/or the jogger configuration of embodiment 3. Hence, the transport device 1 can be converted and adapted to the various different application.

### List of reference signs

- 1: transport device
- 2: wheel
- 3: handle bar
- 4: support frame
- 5: canopy
- 6: drawbar
- 7: Seat back
- 9: front reflector
- 10: back reflector
- 11: stroller wheel
- 12: jogger wheel
- 13: axle
- 14: disc brake
- 15: mounting element
- 100: passenger cabin
- 101: bottom element
- 110: frame
- 111a: bottom frame element
- 111b: bottom frame element
- 112: base frame element
- 113: middle frame element
- 120: washer
- 12a: tubular member
- 121: screw
- 200: polymer foam assembly
- 201: connection area
- 210: seat section
- 211: first polymer foam
- 212: side element
- 213a: through hole
- 213b: through hole
- 215a: protrusions
- 215b: recess
- 216: seating surface
- 217: standing surface
- 218: recess
- 219: recess
- 220: rear section
- 221: second polymer foam
- 222: side element
- 223a: protrusion
- 223b: recess
- 224: recess
- 230: bumper section
- 231: third polymer foam
- R: rotational axis
- B: bottom plane
- T: top plane
- H: height

## Claims

1. Transport device (1), preferably a bicycle trailer and/or a stroller, comprising:
a frame (110);
a seat section (210) formed by a first polymer foam (211) comprising a bottom element, wherein the frame (110) supports the first polymer foam (211); and
at least one wheel (2).

2. Transport device (1) according to claim 1, wherein the transport device (1) further comprises
a rear section (220); and/or
at least one bumper section (230),
wherein preferably the seat section (210) and/or the rear section (220) and/or the bumper section (230) are integrally formed by or with the first polymer foam (211) or by separate and individual polymer foams (221, 231).

3. Transport device (1) according to claim 2, wherein the seat section (210) and the rear section (220) are attached and/or attachable to each other, in particular attached via the frame (110) to each other.

4. Transport device (1) according to any of the preceding claims, wherein the seat section (210) comprises at least one seating surface (217) and/or at least one standing surface (216) and/or and at least one side element (212).

5. Transport device (1) according to any of the preceding claims, wherein the seat section (210) comprises at least one recess (218, 219) and/or at least one through hole (213a, 213b), preferably for attaching a restraint system and/or for weight reducing purposes and/or for accommodating at least a part of the frame (110).

6. Transport device (1) according to any one of the preceding claims wherein the frame (110) comprises at least one bottom frame element (111a, 111b), wherein preferably the at least one bottom frame element (111a, 111b) runs underneath and/or within the seat section (210) and/or the rear section (220) and/or the bumper section (230) and/or wherein in particular the seat section (210) and/or the rear section (220) and/or the bumper section (230), are supported by the at least one bottom frame element (111a, 111b).

7. Transport device (1) according to any one of the preceding claims, wherein the frame (110) comprises at least one base frame element (112), preferably located in an upper area of the seat section (210) and/or the rear section (220) and/or the bumper section (230).

8. Transport device (1) according to any one of the preceding claims, wherein the seat section (210) and/or the rear section (220) and/or the bumper section (230) are attached and/or attachable to the frame (110), preferably also or exclusively attached and/or attachable to the at least one bottom frame element (111a, 111b) and/or to the at least one base frame element (112).

9. Transport device (1) according to claim 8, wherein the attachment of the seat section (210) and/or the rear section (220) and/or the bumper section (230) to the frame (110) comprises a frictional connection, particularly based on the seat section (210) and/or the rear section (220) and/or the bumper section (230) being pressed to the frame (110).

10. Transport device (1) according to any one of the preceding claims, wherein at least one of the polymer foams (211, 221, 231) is a closed cell polymer foam, wherein preferably at least one of the polymer foams (211, 221, 231) is made out of expanded polypropylene (EPP) and/or expanded ethylene-vinyl acetate.

11. Transport device (1) according to any one of the preceding claims, wherein the frame (110) comprises metal and/or a fiber composite and/or plastic, wherein preferably the metal is chosen from steel and/or aluminum and/or the fiber composite is chosen from glass fiber composite and/or carbon fiber composite.

12. Transport device (1) according to any one of the preceding claims, wherein the transport device (1) comprises at least two wheels as main wheels (2), wherein each main wheel (2) is arranged laterally to the frame (110) and/or the seat section (210) and/or the rear section (220) and/or the bumper section (230).

13. Transport device (1) according to any one of the preceding claims, wherein an axle (13) of the at least one wheel (2) is attached to the frame (110).

14. Transport device (1) according to any one of the preceding claims, wherein the rotational axis (R) of the at least one wheel (2) at least partially extends through and/or is at least partially underneath the frame (110) and/or the seat section (210) and/or the rear section (220) and/or the bumper section (230).

15. Transport device (1) according to any one of the preceding claims, wherein the transport device (1) comprises a mounting element (15) for connecting a drawbar (6) and/or at least one front wheel (11, 12).

## Amended claims

### Amended claims in accordance with Rule 137(2) EPC.

1. Transport device (1) being a bicycle trailer, comprising:
a frame (110);
a seat section (210) comprising a bottom element, at least one seating surface (217) and at least one standing surface (216), wherein the seat section (210) is solely formed in an integral manner by a first polymer foam (211), wherein the frame (110) supports the first polymer foam (211); and
at least one wheel (2),
wherein the first polymer foam (211) is a closed cell polymer foam.

2. Transport device (1) according to claim 1, wherein the transport device (1) further comprises
a rear section (220); and/or
at least one bumper section (230),
wherein preferably the seat section (210) and/or the rear section (220) and/or the bumper section (230) are integrally formed by or with the first polymer foam (211) or by separate and individual polymer foams (221, 231),
wherein the polymer foams (221, 231) are a closed cell polymer foam.

3. Transport device (1) according to claim 2, wherein the seat section (210) and the rear section (220) are attached and/or attachable to each other, in particular attached via the frame (110) to each other.

4. Transport device (1) according to any of the preceding claims, wherein the seat section (210) comprises at least one side element (212).

5. Transport device (1) according to any of the preceding claims, wherein the seat section (210) comprises at least one recess (218, 219) and/or at least one through hole (213a, 213b), preferably for attaching a restraint system and/or for weight reducing purposes and/or for accommodating at least a part of the frame (110).

6. Transport device (1) according to any one of the preceding claims wherein the frame (110) comprises at least one bottom frame element (111a, 111b), wherein preferably the at least one bottom frame element (111a, 111b) runs underneath and/or within the seat section (210) and/or the rear section (220) and/or the bumper section (230) and/or wherein in particular the seat section (210) and/or the rear section (220) and/or the bumper section (230), are supported by the at least one bottom frame element (111a, 111b).

7. Transport device (1) according to any one of the preceding claims, wherein the frame (110) comprises at least one base frame element (112), preferably located in an upper area of the seat section (210) and/or the rear section (220) and/or the bumper section (230).

8. Transport device (1) according to any one of the preceding claims, wherein the seat section (210) and/or the rear section (220) and/or the bumper section (230) are attached and/or attachable to the frame (110), preferably also or exclusively attached and/or attachable to the at least one bottom frame element (111a, 111b) and/or to the at least one base frame element (112).

9. Transport device (1) according to claim 8, wherein the attachment of the seat section (210) and/or the rear section (220) and/or the bumper section (230) to the frame (110) comprises a frictional connection, particularly based on the seat section (210) and/or the rear section (220) and/or the bumper section (230) being pressed to the frame (110).

10. Transport device (1) according to any one of the preceding claims, wherein at least one of the polymer foams (211, 221, 231) is made out of expanded polypropylene (EPP) and/or expanded ethylene-vinyl acetate.

11. Transport device (1) according to any one of the preceding claims, wherein the frame (110) comprises metal and/or a fiber composite and/or plastic, wherein preferably the metal is chosen from steel and/or aluminum and/or the fiber composite is chosen from glass fiber composite and/or carbon fiber composite.

12. Transport device (1) according to any one of the preceding claims, wherein the transport device (1) comprises at least two wheels as main wheels (2), wherein each main wheel (2) is arranged laterally to the frame (110) and/or the seat section (210) and/or the rear section (220) and/or the bumper section (230).

13. Transport device (1) according to any one of the preceding claims, wherein an axle (13) of the at least one wheel (2) is attached to the frame (110).

14. Transport device (1) according to any one of the preceding claims, wherein the rotational axis (R) of the at least one wheel (2) at least partially extends through and/or is at least partially underneath the frame (110) and/or the seat section (210) and/or the rear section (220) and/or the bumper section (230).

15. Transport device (1) according to any one of the preceding claims, wherein the transport device (1) comprises a mounting element (15) for connecting a drawbar (6) and/or at least one front wheel (11, 12).
